# EUROPEAN PATENT SPECIFICATION

(11) **EP 0 548 059 B1**
(45) Date of publication and mention of the grant of the patent: **29.01.1997**
(21) Application number: 93200535.8
(22) Date of filing: 17.10.1988
(51) Int. Cl.: H02P 6/00

(54) **Brushless motors**
Bürstenlose Motoren
Moteurs sans balai

(30) Priority: 31.10.1987 JP 276833/87
(43) Date of publication of application: 23.06.1993
(62) Divisional of application: 88309732.1
(73) Proprietor: SONY CORPORATION, Tokyo (JP)
(72) Inventor: Tanaka, Masato, c/o Patents Division, Shinagawa-ku, Tokyo 141 (JP); Kan, Toshiya c/o Patents Division, Shinagawa-ku Tokyo 141 (JP)
(74) Representative: Pilch, Adam John Michael

(56) References cited:
- EP-A- 0 030 611
- EP-A- 0 123 807
- EP-A- 0 231 046
- DE-A- 2 604 638
- GB-A- 2 176 068
- US-A- 4 136 308
- US-A- 4 484 123
- PATENT ABSTRACTS OF JAPAN, vol. 12, no. 177 (E-613) 25 May 1988; & JP-A-62 285 686

## Description

This invention relates to brushless motors and, in particular, to brushless motors in which rotor position sensors are not required.

A known brushless motor typically detects the angular position of the rotor by using a position sensor, such as a Hall-effect element. Upon determining the rotational position of the rotor, a switching pulse is produced that switches the phases of the stator coil energisation based upon the detected signal. Use of Hall-effect elements, however, increases the cost of the motor and also increases the complexity of the wiring and the number of steps required for assembling the motor.

This applicant has previously proposed a brushless motor that does not require a position sensor, such as the known Hall-effect element, and this proposed brushless and sensorless motor is described in Japanese Patent Application Publication No. JP-A-62-285686. In this proposed brushless motor, the voltage induced in the stator coil by the rotor magnet is detected and utilised to form pulses that indicate specific angular positions of the rotor, and this pulsed signal is delayed by a fixed value to form the energisation timing pulses at the respective switching positions.

In order to produce these stator coil energisation timing pulses in the previously proposed sensorless brushless motor, a fixed time delay device is provided, such as a monostable multivibrator. This proposed system has the drawback that it is not applicable to motors in which the speed is controlled over a relatively wide range. For example, the brushless motor utilised in a constant linear velocity (CLV) type of video disc player cannot easily be implemented with the previously proposed system. In the proposed sensorless brushless motor, in order to start the motor, special energisation pulses are generated at fixed intervals and with fixed durations regardless of the initial angular position of the rotor. Therefore, the energisation angle of the stator coils is not synchronised with the rotational angle of the rotor resulting in poor starting characteristics.

Furthermore, because detection of the angular position of the rotor is based on the induced voltages in a stator excitation coil, substantial noise, in the form of spikes, is generated at each energisation switching point in the coil. The noise spikes, as well as other forms of noise in the detection system, are then mixed in the detection signal used to determine the rotor angular position. Therefore, because of this noise, the rotor energisation switching angles, the duration of the energisation pulses, as well as the polarities of the energisation pulses, cannot be determined in a stable fashion.

German Patent Application No. DE-A-2 604 638 discloses a brushless motor similar to that described above.

European Patent Application No. EP-A-0 231 046 discloses a commutation circuit for a brushless motor in which a delay circuit provides a delay time during which the influence of transient effects causing parasitic zero crossings may be eliminated.

According to the present invention there is provided a sensorless brushless motor comprising:
a rotor;
an excitation coil;
a switching circuit for performing energisation switching of the excitation coil;
a reference position detector for detecting a reference position of rotor rotation based on a voltage induced in said excitation coil by said rotor;
a delay circuit for producing a delay clock signal having pulses delayed by a predetermined amount from the reference position detected by said reference position detector;
a delay pulse signal forming circuit for producing a delay pulse signal based on the delay clock signal from said delay circuit; and
a switching signal generator for generating an energisation switching signal fed to said switching circuit in response to the delay pulse signal;
characterised in that:
a masking circuit is provided for forming a noise masking signal with a predetermined masking width based on at least the delay clock signal for suppressing noise pulses in a detection output of said reference position detector at the reference position; and
a control circuit is provided for varying the masking width in accordance with the rotational speed of said motor.
Dependent Claims are related to further embodiments.

The invention will now be described by way of example with reference to the accompanying drawings, throughout which like parts are referred to by like references, and in which:
Figure 1 is a block diagram of a drive circuit for a sensorless brushless motor;
Figure 2 is a circuit diagram showing a switching circuit in the drive circuit of Figure 1 in more detail;
Figures 3A and 3B are plan views of a rotor and a stator, respectively, of the sensorless brushless motor of Figure 1;
Figures 4A to 4E represent waveforms of signals present in the motor of Figure 1 during operation thereof;
Figure 5 is a schematic diagram showing elements of the drive circuit of Figure 1 in more detail; and
Figure 6 is a waveform chart showing the waveforms of signals present in the circuit of Figure 5 during operation thereof.

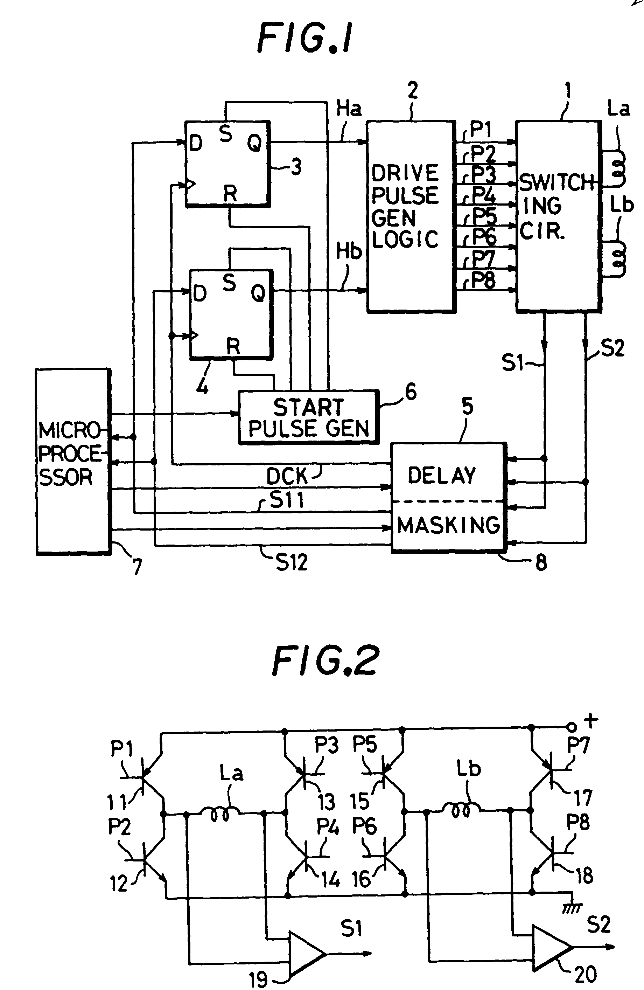

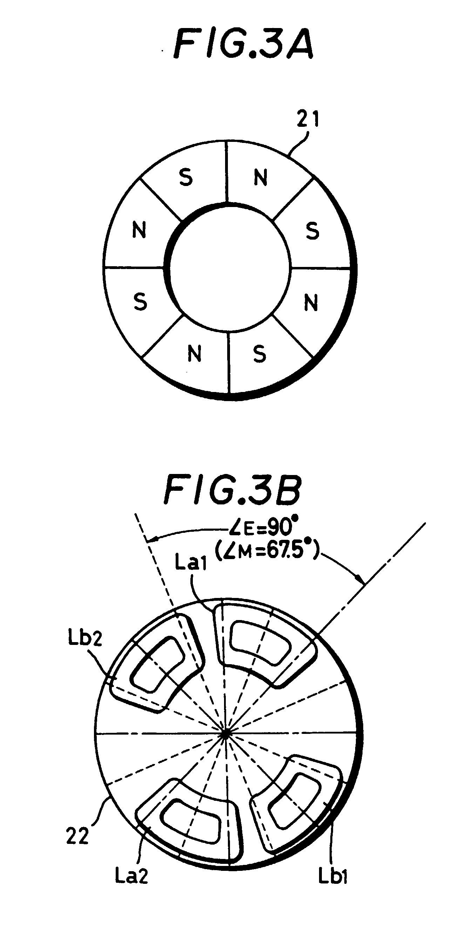

Figure 1 shows a drive circuit for a sensorless brushless motor, which in this embodiment is assumed to be of the two-phase bidirectional energisation type. Such a motor includes a rotor 21 as shown in Figure 3A, which comprises magnets arranged to form eight poles. Similarly, Figure 3B is a plan view of a stator for such a motor having two-phase coils La1, La2 and Lb1, Lb2 having an electrical angle of 90° and a mechanical angle of 67.5° formed on a stator base 22. The stator coils consist of two pairs of series coils La1 and La2, and Lb1 and Lb2, respectively, which are arranged at electrically in-phase positions, that is, arranged at an integer multiple of an electrical angle of 360°. The winding pitch of each coil is an electrical angle of 180° or a mechanical angle of 45°.

The two-phase coils La and Lb are reciprocally connected to an energisation circuit by a switching circuit 1, as shown in Figure 1. Such reciprocal connection or switching is also known as bidirectional switching.

Figure 2 shows the switching circuit 1 of Figure 1 in more detail, in which transistors 11, 12, 13 and 14 are bridge-connected to the coil La, and transistors 15, 16, 17 and 18 are bridge-connected to the coil Lb. The transistors 11 to 18 are then turned on every electrical angle of 90° by drive pulses P1 to P8 which are applied to the base circuits of the transistors 11 to 18, respectively. Accordingly, the ends of each load or coil, La and Lb, are selectively connected between the positive terminal (+) of a power supply and its earth or ground terminal, thereby providing a driving force for the motor.

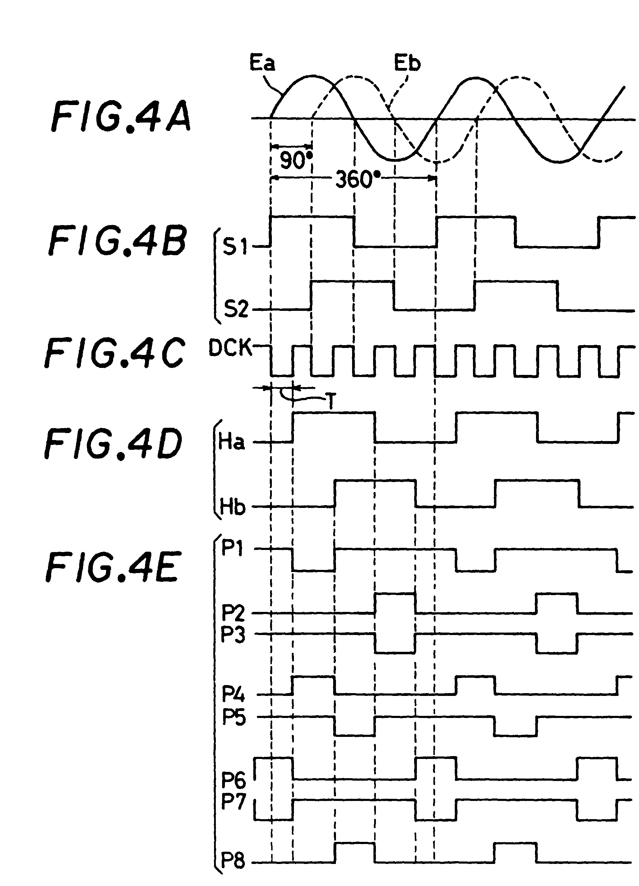

As is well known, during rotation of the motor, sinusoidal induced voltages Ea and Eb having a mutual phase difference of 90° are generated across the coils La and Lb by the rotor magnets. These induced sinusoidal voltages are shown in Figure 4A, with the voltage Ea shown by a solid line and the voltage Eb shown by a broken line, with a 90° phase difference therebetween. The induced voltages Ea and Eb are then wave shaped at the zero crossing points, that is, at the AC neutral potentials, by comparators 19 and 20, respectively, each having inputs connected to the two ends of the respective coils La and Lb. Thus, pulse signals S1 and S2 (Figure 4B) having a mutual phase difference of 90° corresponding to the induced voltages Ea and Eb are obtained as the outputs from the comparators 19 and 20. These pulse signals S1 and S2 are therefore synchronised and phase-locked with the induced voltages Ea and Eb, and their high and low levels correspond to the respective AC polarities of the induced voltages, as shown in Figure 4B. Thus, the pulse signals S1 and S2 indicate a reference angular position of the rotor relative to the stator coils La and Lb.

The pulse signals S1 and S2 are then fed to a delay circuit 5 that forms a delay clock signal DCK, the leading edges of which are delayed by a time T from the leading and trailing edges of the pulse signals S1 and S2, as shown in Figure 4C. The manner in which the clock signal DCK is produced will be explained in detail below. Thus, the trailing edges of the clock signal DCK are synchronised with the pulse signals S1 and S2 and the time T corresponds to an electrical angle of 45°. Therefore, an energisation angle having a 90° width with a leading edge corresponding to a 45° position from the magnetic pole boundary corresponding to the reference position of the rotor magnet 21 can be obtained without an angular position sensor, which would otherwise be required. As will be described hereinbelow, the time T can be variably controlled by a microprocessor 7 so that it is always kept at an electrical angle of 45°, even if the rotational speed of the motor is varied.

The pulse signals S1 and S2 from the switching circuit 1 in Figure 1 are also fed to a masking circuit 8, which can optionally share common elements with the delay circuit 5. The masking circuit 8 transforms the pulse signals S1 and S2 into signals S11 and S12, respectively, which are then fed to the D inputs of respective D-type flip-flops 3 and 4. The operation of the masking circuit 8 will be explained hereinbelow, and at this time it is to be noted that the masking circuit 8 removes the noise pulses included in the pulse signals S1 and S2 at all portions other than the zero crossing sections of the induced voltage signals Ea and Eb. Because the noise pulses are based upon the energisation switching of the stator coils, the noise pulses are generated at specific positions and, thus, the masking position and according to the invention the widths of the masking pulses are controlled by the control data according to the motor speed from the microprocessor 7. The flip-flops 3 and 4 receive the delayed clock signal DCK at the respective clock inputs thereof and, thus, the flip-flops 3 and 4 produce pulse signals Ha and Hb, delayed by 45° relative to the pulse signals S1 and S2, as shown in Figure 4D. These pulse signals Ha and Hb are fed to a drive pulse generator logic circuit 2 that forms the bidirectional energisation pulses P1 to P8 at every 90° electrical angle, as shown in Figure 4E. It is these pulses P1 to P8 that are utilised to turn on and off the transistors 11 to 18 of Figure 2 and thereby control the rotation of the motor. The drive pulse generator logic circuit 2 produces the bidirectional energisation pulses P1 to P8 by straightforward logic processing or encoding so that the polarities of the magnetic poles of the rotor correspond to the energisation polarities during the 90° wide intervals (45°-135° and 225°-315°) of the magnetic poles opposite the coils La and Lb. In this fashion, rotational torque in one direction is generated.

Of course, when the rotor 21 is not rotating and is stopped relative to the stator 22, no voltages will be induced in the stator coils La and Lb. Accordingly, when it is desired to start the motor, a start pulse signal is generated by a start pulse generator 6 for a period of time. The start pulse generator 6 is controlled by the microprocessor 7 to which the motor start switch (not shown) is connected. The start pulse generator 6 supplies start pulse signals to the set (S) and reset (R) terminals of the flip-flops 3 and 4, thereby forming two-phase pulse signals similar to the pulse signals Ha and Hb shown in Figure 4D. Accordingly, when the motor is started, the coils La and Lb are separately excited by the start pulse signals from the start pulse generator 6, and the rotor 21 is caused to rotate in a predetermined rotational direction depending upon the phase relationship between the start pulse signals produced by the start pulse generator 6 as determined by the microprocessor 7.

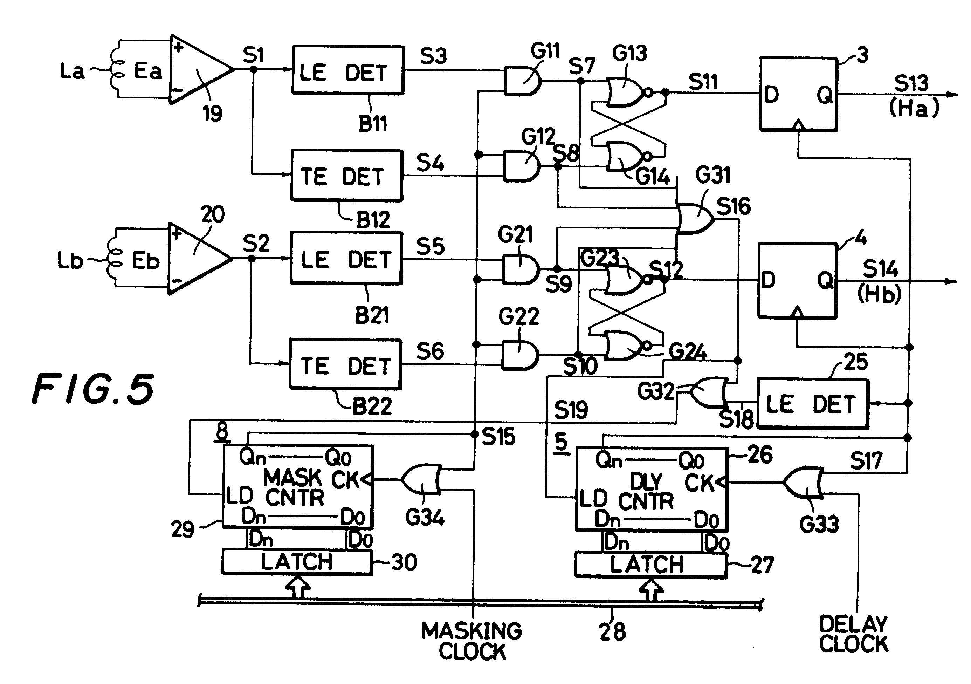

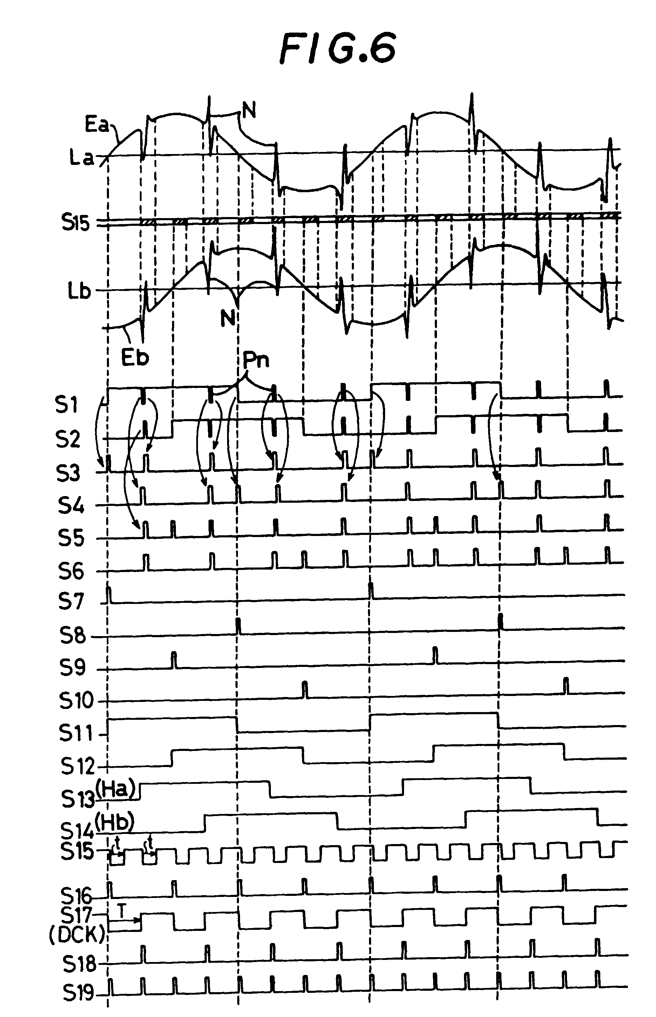

The delay circuit 5 of Figure 1 is shown in more detail in Figure 5, as is the masking circuit 8. Figure 6 represents waveforms appearing throughout the circuit of Figure 5 during operation thereof. More specifically, the induced voltages Ea and Bb induced respectively in the coils La and Lb are applied to the comparators 19 and 20, respectively, and are so-called zero-cross shaped therein. The comparators 19 and 20 form the pulse signals S1 and S2 also shown in Figure 6, and in accordance with typical comparator operation, the comparators 19 and 20 in addition to detecting the induced voltages Ea and Eb will also detect the noise spikes caused by the stator coil switching. Such noise spikes are shown at N in the voltage waveforms Ea and Eb in Figure 6, and because they are generated at the current switching positions, noise will be found at the corresponding points 45°, 135°, 225° and 315°, of the induced voltage signals Ea and Eb. The noise spikes N will be detected by the comparators 19 and 20 and will result in noise pulses Pn being present in the pulse signals S1 and S2. It is these noise pulses Pn that are removed by the masking circuit 8.

Referring to Figure 5, the output (S1) from the comparator 19 is fed to a leading edge detector B11 and a trailing edge detector B12, and the output (S2) of the comparator 20 is fed to a leading edge detector B21 and a trailing edge detector B22. Thus, the pulse signal S1 is developed into edge pulses S3 and S4 as shown in Figure 6, and the pulse signal S2 is developed into edge pulses S5 and S6, also as shown in Figure 6. These edge pulses S3, S4, S5 and S6 are fed to respective masking AND gates G11, G12, G21 and G22. As will be explained hereinbelow, these masking AND gates G11, G12, G21 and G22 serve to remove the noise pulses Pn, with the resultant signals being shown in Figure 6 as edge pulses S7, S8, S9 and S10, respectively. The edge pulses S7 and S8 are fed to an RS flip-flop formed by NOR gates G13 and G14, and the edge pulses S9 and S10 are fed to a second RS flip-flop formed by NOR gates G23 and G24. These two sets of NOR gates then produce the pulse signals S11 and S12, as shown in Figure 6. As may be seen, because of the masking effect, the pulse signals S11 and S12 have the noise pulses Pn removed therefrom at points other than the zero-crossing points of the pulse signals S1 and S2.

As shown in Figure 1, the pulse signals S11 and S12 are fed to the clock inputs of the D-type flip-flops 3 and 4, which act to form delayed pulses S13 and S14 that correspond to the signals Ha and Hb in Figure 6, respectively.

The outputs (S7, S8, S9 and S10) from the masking AND gates G11, G12, G21 and G22 are also connected to a multiple input OR gate G31, so that a pulse signal indicating two edges of the two-phase signal is formed, that is, the pulses indicate the leading and trailing edges of each of the two signals, as shown by the signal S16 in Figure 6. The signal S16 is supplied as a load pulse to a terminal LD of a delay counter 26, which forms the delay circuit 5 shown in Figure 1. The load input of the counter 26 then causes control data D0 to Dn corresponding to the rotational speed of the motor to be input to the counter 26 from a data bus 28 of the microprocessor 7 through a latch circuit 27. Thereafter, the counter 26 counts the delay clock signals having a predetermined frequency fed in from an external clock circuit (not shown) through an OR gate G33 in response to the load pulse S16 based on the load data. Accordingly, the delay counter 26 will generate an nth-bit (most significant bit) output with the leading edge occurring after a time T, as shown in a waveform S17 of Figure 6. The frequency of the delay clock signal is based on the resolution (resolving power or resolving efficiency) of the counter 26.

The locations of the load pulses in the waveform S16 correspond to electrical angles of 0°, 90°, 180° and 270°, and the time T is controlled, that is, lengthened or shortened, in accordance with the load data, as fed in from the microprocessor 7. Thus, the time T is controlled to correspond to each 45° width between the electrical angles 0° and 45°, between 90° and 135°, between 180° and 225°, and between 270° and 315°, regardless of change in rotational speed of the motor. In other words, at low speed the time T is lengthened and at high speed the time T is shortened.

The delay counter 26 then counts the clock signals fed in through the OR gate G33 and, upon reaching the most significant bit Qn, the output of the counter 26 goes high. This output of the counter 26 is connected to another input of the OR gate G33, thereby blocking the clock input to the counter 26. Therefore, the most significant bit output Qn of the counter 26, shown by the waveform S17 in Figure 6, remains at a high level until the next load pulse S16 is fed to the counter 26 to reset the counter and, thus, the most significant bit level output Qn falls to a low level. The counter output S17 is also fed to the clock inputs of the flip-flops 3 and 4 as the delayed clock signal DCK in the circuit of Figure 1, which signal waveforms are also shown in Figure 4C, thereby forming the delayed pulse signals Ha and Hb, which correspond respectively to the signals S13 and S14 in Figure 6.

The most significant bit output from the delay counter 26 is also fed to a third leading edge detector 25, so that a pulse representing the leading edge indicated by an edge pulse signal waveform S18 in Figure 6 is formed. The edge pulse signal S18 represents the positions at electrical angles of 45°, 135°, 225° and 315° of respective phases of the two-phase signal. This signal is also fed to an OR gate G32 that forms an OR output signal S19 from the edge pulse signal S18 and the output pulse signal S16, which corresponds to 0° and 180° electrical angle, of the multiple input OR gate G31. Because the output pulse signal S19 is derived from the counter output signal S17, the interval between pulses of the output pulse signal S19 is lengthened or shortened in accordance with the delay time T; however, the electrical phase angle remains constant at 0°, 45°, 135°, 180°, 225° and 315°.

This OR gate output pulse signal S19 is fed as the load pulse to an input LD of a masking counter 29, which comprises the masking circuit 8 of Figure 1. The masking counter 29 fetches control data corresponding to the rotational speed of the motor from the data bus 28 of the microprocessor 7 through a latch circuit 30, in an operation similar to that of the delay counter 26. The masking counter 29 counts masking clock pulses provided by an external clock circuit (not shown) at a predetermined frequency by receiving a clock signal through an OR gate G34 at a clock input CK. The frequency of the masking clock is determined by the resolution or resolving power, or the resolving efficiency, of the masking counter 29. Thus, the masking counter 29 generates from the most significant bit (MSB) position Qn a masking pulse signal that falls at angular positions of 0°, 180°, 45°, 135° and 315°, as indicated by the pulse signal S15 in Figure 6, in which the masking pulse rises after lapse of a predetermined time period t, termed the masking width. Because the masking clock input to the masking counter 29 is connected through the OR gate G34 that has as another input signal the MSB signal S15 from the masking counter 29 when the MSB signal goes to a high level, the masking clock is disabled by the OR gate G34 and the counting operation is interrupted until the next load pulse provided by the output signal S19 is fed to the masking counter 29.

As described above, according to the invention the masking width t is varied in accordance with the rotational speed of the motor as determined by the microprocessor 7.

The masking pulse S15 is also fed to the masking AND gates G11, G12, G21 and G22 so that the AND gates are closed during the low-level period t of the masking pulse signal S15. This has the effect that predetermined periods immediately following the zero-crossing detection at 0° and 180°, and at predetermined periods immediately after the current switching timings at 45°, 135°, 225° and 315°, are masked, as indicated by the induced voltage waveforms Ea and Eb in Figure 6.

Thus, even if low level noise pulses are superimposed on the induced stator voltages Ea and Eb near the zero-crossing points and the pulse signal outputs S1 and S2 from the comparators 19 and 20 fluctuate accordingly, once the leading edge of the pulse signal S1 or S2 is detected, these noise pulses are ignored as a result of the masking signal. Accordingly, the pulse signals S11 and S12, having a correct period in which positive and negative half cycles of the induced voltages respectively correspond to the high and low levels, can be obtained. Similarly, because noise spikes generated at the stator coil switching points can be removed by masking immediately after the current switching, the detection at the crossing points 0° and 180° is not interfered with. Thus, switching timings can be accurately determined by utilising the above-described digital delay because the 0° and 180° positions can be accurately detected.

As shown in Figure 1, the zero-crossing detection pulse signals S11 and S12, from which any noise interference has been removed by the masking circuit 8, are also fed to the microprocessor 7. The periods of the pulse signals S11 and S12 are detected therein so that the rotational speed of the motor can be determined. Control data formed by speed detection is then output on to the data bus 28, shown in Figure 5, in order to determine the delay time T and the masking width t corresponding to each 45° interval between 0° and 45°, between 90° and 135°, between 180° and 225°, and between 270° and 315°. As described above, because the pulse signals S11 and S12 having a correct period can be supplied through the masking circuit 8, speed detection can be accurately obtained. Alternatively, speed detection may be performed by a frequency generator or a pulse generator attached to the motor.

In the above-described embodiment, the present invention is applied to a two-phase bidirectional energisation type sensorless brushless motor. However, the present invention finds equal application to a polyphase unidirectional motor or a bidirectional energisation type sensorless brushless motor.

## Claims

1. A sensorless brushless motor comprising:
a rotor (21);
an excitation coil (La,Lb);
a switching circuit (1) for performing energisation switching of the excitation coil (La,Lb);
a reference position detector (19,20) for detecting a reference position of rotor rotation based on a voltage (S1,S2) induced in said excitation coil (La,Lb) by said rotor;
a delay circuit (5) for producing a delay clock signal (DCK) having pulses delayed by a predetermined amount (T) from the reference position detected by said reference position detector (19,20);
a delay pulse signal forming circuit (3,4) for producing a delay pulse signal (Ha,Hb) based on the delay clock signal (DCK) from said delay circuit (5); and
a switching signal generator (2) for generating an energisation switching signal (P1 to P8) fed to said switching circuit (1) in response to the delay pulse signal (Ha,Hb);
characterised in that:
a masking circuit (8) is provided for forming a noise masking signal (S15) with a predetermined masking width (t) based on at least the delay clock signal (DCK) for suppressing noise pulses (N) in a detection output of said reference position detector (19,20) at the reference position; and
a control circuit (7) is provided for varying the masking width (t) in accordance with the rotational speed of said motor.

2. A motor according to claim 1, wherein said masking circuit (8) is operable to form the noise masking signal (S15) with the predetermined masking width (t) based on the delay clock signal (DCK) and the detection output of the reference position detector (19,20) immediately after the detection of the reference position and generation of the switching signal.

3. A motor according to claim 1 or claim 2, comprising a masking gate circuit (G11 to G22) for receiving a detected reference position from said reference position detector (19,20) and said noise masking signal (S15) and producing a pulse signal (S11,S12) from which the noise pulses (N) are removed and which is fed to said delay pulse signal forming circuit (3,4).

4. A motor according to claim 3, comprising leading and trailing edge detectors (B11, B21, B12, B22) for producing edge pulses (S3 to S6) for feeding to said masking gate circuit (G11 to G22) based on the detected reference position from said reference position detector (19,20).

5. A motor according to any one of the preceding claims, wherein said switching circuit (1) comprises a plurality of transistors (11 to 18) connected in a bridge network to said excitation coil (La,Lb).

6. A motor according to any one of the preceding claims, wherein said reference position detector comprises a zero-crossing comparator (19,20).

7. A motor according to any one of the preceding claims, wherein said delay circuit (5) comprises a delay counter (26) with said delay clock signal (DCK) being produced at an output thereof.

8. A motor according to any one of the preceding claims, wherein said delay pulse signal forming circuit comprises a flip-flop (3,4).

9. A motor according to any one of the preceding claims, wherein said masking circuit (8) comprises a masking counter (29).

## Patentansprüche

1. Sensorloser bürstenloser Motor, mit:
einem Rotor (21);
einer Erregungsspule (La, Lb);
einer Umschaltschaltung (1) zur Durchführung einer Umschaltung der Erregung der Erregungsspule (La, Lb);
einem Referenzpositionsdetektor (19, 20) zur Ermittlung einer Referenzposition der Rotordrehung auf der Basis einer Spannung (S1, S2), die in die Erregungsspule (La, Lb) durch den Rotor induziert wird;
einer Verzögerungsschaltung (5) zur Erzeugung eines Verzögerungstaktsignals (DCK), das Impulse hat, die um einen vorgegebenen Betrag (T) in bezug auf die Referenzposition verzögert sind, die durch den Referenzpositionsdetektor (19, 20) ermittelt wird;
einer Verzögerungsimpulssignalbildungsschaltung (3, 4) zur Erzeugung eines Verzögerungsimpulssignals (Ha, Hb) auf der Basis des Verzögerungstaktsignals (DCK) von der Verzögerungsschaltung (5); und
einem Umschaltsignalgenerator (2) zur Erzeugung eines Erregungs-Umschaltsignals (P1 bis P8), welches zur Umschaltschaltung (1) als Antwort auf das Verzögerungsimpulssignal (Ha, Hb) geliefert wird;
**dadurch gekennzeichnet,** daß
eine Maskierungsschaltung (8) bereitgestellt ist, um ein Rauschmaskierungssignal (S15) mit einer vorgegebenen Maskierungsbreite (t) auf der Basis zumindest des Verzögerungstaktsignals (DCK) zu bilden, um Rauschimpulse (N) in einem Ermittlungsausgangssignal des Referenzpositionsdetektors (19, 20) in der Referenzposition zu unterdrücken; und
eine Steuerschaltung (7) vorgesehen ist, um die Maskierungsbreite (t) in Abhängigkeit von der Drehgeschwindigkeit des Motors zu verändern.

2. Motor nach Anspruch 1, wobei die Maskierungsschaltung (8) das Rauschmaskierungssignal (S15) mit der vorgegebenen Maskierungsbreite (t) auf der Basis des Verzögerungstaktsignals (DCK) und des Ermittlungsausgangssignals des Referenzpositionsdetektors (19, 20) unmittelbar nach der Ermittlung der Referenzposition und der Erzeugung des Umschaltsignals bildet.

3. Motor nach Anspruch 1 oder 2, der eine Maskierungs-Gate-Schaltung (G11 bis G22) besitzt, um eine ermittelte Referenzposition vom Referenzpositionsdetektor (19, 20) und dem Rauschmaskierungssignal (S15) zu empfangen, und um ein Impulssignal (S11, S12) zu erzeugen, aus denen die Rauschimpulse (N) entfernt sind und welches zur Verzögerungsimpulssignalbildungsschaltung (3, 4) geliefert wird.

4. Motor nach Anspruch 3, der Anstiegsflanken- und Abfallsflanken-Detektoren (B11, B21, B12, B22) besitzt, um Flankenimpulse (S3 bis S6) zu erzeugen, um diese zu der Maskierungs-Gate-Schaltung (G11 bis G22) auf der Basis der ermittelten Referenzposition vom Referenzpositionsdetektor (19, 20) zu liefern.

5. Motor nach einem der vorhergehenden Ansprüche, wobei die Umschaltschaltung (1) mehrere Transistoren (11 bis 18) aufweist, die in einem Brückenschaltungs-Netzwerk mit der Erregungsspule (La, Lb) verbunden sind.

6. Motor nach einem der vorhergehenden Ansprüche, wobei der Referenzpositionsdetektor einen Nulldurchgangs-Komparator (19, 20) besitzt.

7. Motor nach einem der vorhergehenden Ansprüche, wobei die Verzögerungsschaltung (5) einen Verzögerungszähler (26) besitzt, wobei das Verzögerungssignal (DCK) an seinem Ausgang erzeugt wird.

8. Motor nach einem der vorhergehenden Ansprüche, wobei die Verzögerungsimpulsignalbildungsschaltung ein Flipflop (3, 4) besitzt.

9. Motor nach einem der vorhergehenden Ansprüche, wobei die Maskierungsschaltung (8) einen Maskierungszähler (29) besitzt.

## Revendications

1. Moteur à courant continu sans collecteur et sans capteur, comprenant:
- un rotor (21);
- un bobinage d'excitation (La, Lb);
- un circuit de commutation (1) pour effectuer la commutation d'excitation du bobinage d'excitation (La, Lb);
- un détecteur de position de référence (1ç, 20) pour détecter une position de référence de rotation du rotor sur la base d'une tension (S1, S2) induite dans ledit bobinage d'excitation (La, Lb) par ledit rotor;
- un circuit à retard (5) pour produire un signal d'horloge à retard (DCK) ayant des impulsions retardées d'une valeur prédéterminée (T) par rapport à la position de référence détectée par ledit détecteur de position de référence (19, 20);
- un circuit (3, 4) formant un signal à impulsions à retard pour produire un signal à impulsions à retard (Ha, Hb) sur la base du signal d'horloge à retard (DCK) issu dudit circuit à retard (5); et
- un générateur de signal de commutation (2) pour produire un signal de commutation d'excitation (P1 à P8) appliqué audit circuit de commutation (1) en réponse au signal à impulsions à retard (Ha, Hb),
caractérisé en ce que:
- un circuit de masquage (8) est prévu pour former un signal de masquage du bruit (S15) ayant une largeur de masquage prédéterminée (t) basée sur au moins le signal d'horloge à retard (DCK) pour éliminer les impulsions de bruit (N) dans le signal de sortie de détection dudit détecteur de position de référence (19, 20) à la position de référence; et
- un circuit de commande (7) est prévu pour faire varier la largeur de masquage (t) selon la vitesse de rotation dudit moteur.

2. Moteur selon la revendication 1, dans lequel ledit circuit de masquage (8) fonctionne pour former le signal de masquage de bruit (S15) ayant la largeur de masquage prédéterminée (t) sur la base du signal d'horloge à retard (DCK) et du signal de sortie de détection du détecteur de position de référence (19, 20) immédiatement après la détection de la position de référence et la génération du signal de commutation.

3. Moteur selon la revendication 1 ou la revendication 2, comprenant un circuit à porte de masquage (G11 à G22) pour recevoir une position de référence détectée issue dudit détecteur de position de référence (19, 20) et ledit signal de masquage du bruit (S15) et produire un signal à impulsions (S11, S12) dans lequel les impulsions de bruit (N) sont éliminées et qui est appliqué audit circuit formant le signal à impulsions à retard (3, 4).

4. Moteur selon la revendication 3, comprenant des détecteurs de flancs avant et de flancs arrière (B11, B21, B12, B22) pour produire des impulsons de flancs (S3 à S6) pour fourniture audit circuit à porte de masquage (G11 à G22) sur la base de la position de référence détectée issue dudit détecteur de position de référence (19, 20).

5. Moteur selon l'une quelconque des revendications précédentes, dans lequel ledit circuit de commutation (1) comprend une pluralité de transistors (11 à 18) connectés dans un réseau en pont à ladite bobine d'excitation (La, Lb).

6. Moteur selon l'une quelconque des revendications précédentes, dans lequel ledit détecteur de position de référence comprend un comparateur de passage par zéro (19, 20).

7. Moteur selon l'une quelconque des revendications précédentes, dans lequel ledit circuit à retard (5) comprend un compteur à retard (26), ledit signal d'horloge à retard (DCK) étant produit à une sortie de celui-ci.

8. Moteur selon l'une quelconque des revendications précédentes, dans lequel ledit circuit formant un signal à impulsions à retard comprend une bascule (3, 4).

9. Moteur selon l'une quelconque des revendications précédentes, dans lequel ledit circuit de masquage (8) comprend un compteur de masquage (29).
